# FASCICULE DE BREVET EUROPEEN

(11) **EP 3 899 460 B1**
(45) Date de publication et mention de la délivrance du brevet: **01.11.2023**
(21) Numéro de dépôt: 19850763.4
(22) Date de dépôt: 18.12.2019
(51) Int. Cl.: G01J 3/02, G01J 3/44, G02B 21/00

(54) **APPAREIL ET PROCÉDÉ DE MICRO-SPECTROMÉTRIE À BALAYAGE DE FAISCEAU LUMINEUX**
VORRICHTUNG UND VERFAHREN ZUR LICHTSTRAHLABTASTENDE MIKROSPEKTROMETRIE
APPARATUS AND METHOD FOR LIGHT-BEAM SCANNING MICROSPECTROMETRY

(30) Priorité: 21.12.2018 FR 1873992
(43) Date de publication de la demande: 27.10.2021
(73) Titulaire: Horiba France SAS, 91120 Palaiseau (FR)
(72) Inventeur: FROIGNEUX, Emmanuel, 59650 VILLEUNEUVE D'ASCQ (FR)
(74) Mandataire: Jacobacci Coralis Harle
(86) Numéro de dépôt international: PCT/FR2019/053162
(87) Numéro de publication internationale: WO 2020/128333

(56) Documents cités:
- WO-A1-2011/047911
- WO-A1-2015/159035
- WO-A1-2018/089865
- US-A1- 2006 012 891
- JOSE M. SASIAN: "Double-curvature surfaces in mirror system design", OPTICAL ENGINEERING., vol. 36, no. 1, 1 janvier 1997 (1997-01-01), page 183, XP055629520, BELLINGHAM ISSN: 0091-3286, DOI: 10.1117/1.601157
- JÉRÔME BOULANGER ET AL: "Fast high-resolution 3D total internal reflection fluorescence microscopy by incidence angle scanning and azimuthal averaging", PROCEEDINGS OF THE NATIONAL ACADEMY OF SCIENCES (PNAS), vol. 111, no. 48, 17 novembre 2014 (2014-11-17), pages 17164-17169, XP055599410, US ISSN: 0027-8424, DOI: 10.1073/pnas.1414106111

## Description

La présente invention concerne de manière générale le domaine des appareils et procédés de micro-spectrométrie dans lesquels un faisceau lumineux d'excitation est positionné ou déplacé à travers un objectif de microscope sur un échantillon et dans lesquels un faisceau lumineux formé par diffusion et/ou réflexion sur l'échantillon est collecté pour être analysé spectralement.

Elle concerne plus particulièrement un appareil et procédé de micro-spectrométrie Raman à balayage de faisceau laser. Elle concerne aussi un appareil et procédé de microscopie de fluorescence en réflexion totale interne.

On connaît notamment du document EP1983332A un procédé d'imagerie spectroscopique et un système d'exploration par balayage de faisceau sur un échantillon. Plus précisément, le document EP1983332A décrit un dispositif de balayage placé dans le tube d'un microscope confocal de manière à être inséré entre l'objectif de microscope et le filtre d'injection-réjection d'un spectromètre Raman. Le dispositif de balayage comporte deux miroirs galvanométriques disposés en série sur le trajet optique d'un faisceau laser. Les deux miroirs galvanométriques ont des axes de rotation transverses entre eux pour déplacer angulairement le faisceau laser suivant des directions orthogonales sur la surface de l'échantillon. Le système optique à deux miroirs permet de déplacer angulairement le faisceau laser d'excitation de manière à le positionner en différents points de la surface de l'échantillon. Par retour inverse de la lumière, ce système optique à deux miroirs permet de collecter un faisceau de rétro-diffusion Raman pour le transmettre en direction d'un système de détection comprenant un spectromètre Raman. L'avantage de ce système à deux miroirs galvanométriques est que la source laser et le système de détection restent fixes. Cet appareil permet d'acquérir une image par spectrométrie Raman d'une portion de la surface d'un échantillon avec une résolution d'environ 50x50 points en une dizaine de minutes.

D'autres documents de brevet décrivent des appareils de microscopie à balayage de faisceau (voir par exemple WO 2010/069987, US 2005/128476 ou JP 2001 091848).

Le document WO 2015/159035 A1 décrit un autre appareil et procédé de microscopie à balayage de faisceau lumineux ou à déplacement angulaire de faisceau lumineux comprenant au moins un premier miroir et un deuxième miroir disposés en série sur un trajet optique d'un faisceau lumineux entre une source de lumière et un objectif de microscope, le premier miroir étant incliné suivant un premier angle de rotation prédéterminé et le deuxième miroir étant incliné suivant un deuxième angle de rotation de manière à faire pivoter l'axe du faisceau lumineux autour du centre de la pupille de l'objectif de microscope. Ce système permet d'augmenter la zone de balayage du faisceau sur l'échantillon sans effet de vignettage. Par retour inverse de la lumière, ce système permet de collecter un flux Raman important. Toutefois, ce système nécessite une synchronisation entre l'inclinaison du premier miroir et du deuxième miroir disposés en série et est relativement coûteux.

WO2018/089865 A1 et WO2011/047911 A1 divulguent des microscopes à balayage.

Un des buts de l'invention est de proposer un appareil et procédé de micro-spectrométrie à déplacement ou balayage du faisceau lumineux d'excitation, dans lequel le système de balayage soit simple et peu coûteux, tout en permettant de balayer une zone étendue spatialement et/ou angulairement sur l'échantillon.

Un autre but l'invention est d'accroître l'étendue spatiale du champ de mesure sans modifier la résolution spatiale des mesures ni la qualité des mesures.

Un autre but de l'invention est d'améliorer la qualité des mesures de microspectrométrie Raman ou de fluorescence.

Un autre but de l'invention est de diminuer la durée d'acquisition des mesures de microspectrométrie Raman ou de fluorescence acquises en un point déterminé d'un échantillon ou par balayage d'une zone d'un échantillon.

Afin de remédier aux inconvénients précités de l'état de la technique, la présente invention propose un appareil de micro-spectrométrie à balayage de faisceau lumineux comprenant au moins une source de lumière adaptée pour émettre un faisceau lumineux d'excitation, un objectif de microscope disposé suivant un axe optique principal de l'appareil de micro-spectrométrie, l'objectif de microscope ayant un plan focal objet et un plan focal image, un système de déplacement du faisceau lumineux d'excitation suivant deux directions spatiales (X, Y) transverses à l'axe optique du faisceau, l'objectif de microscope et le système de déplacement étant adaptés pour déplacer le faisceau lumineux d'excitation sur un échantillon, un système optique adapté pour collecter un faisceau lumineux formé par réflexion, diffusion et/ou transmission du faisceau lumineux d'excitation sur l'échantillon et un système de détection spectrométrique adapté pour recevoir le faisceau lumineux formé par réflexion, diffusion et/ou transmission.

Plus particulièrement, on propose selon l'invention un système de déplacement du faisceau lumineux d'excitation comprenant un premier composant optique focalisant adapté pour recevoir et focaliser le faisceau lumineux d'excitation en un point de focalisation dans un plan focal intermédiaire, un autre composant optique focalisant disposé sur un trajet optique du faisceau entre le plan focal intermédiaire et l'objectif de microscope, l'autre composant optique focalisant étant adapté pour former une image du plan focal intermédiaire dans le plan focal objet ou, respectivement, dans le plan focal image de l'objectif de microscope, et un seul miroir de balayage disposé sur le trajet optique du faisceau lumineux d'excitation entre le premier composant optique focalisant et le plan focal intermédiaire, le miroir de balayage étant plan et monté sur une platine orientable autour de deux axes de rotation transverses, les deux axes de rotation étant dans le plan du miroir de balayage, le miroir de balayage étant adapté pour déplacer le point de focalisation suivant deux directions transverses dans le plan focal intermédiaire de manière à déplacer l'image du point de focalisation suivant deux directions transverses dans le plan focal objet ou, respectivement, dans le plan focal image de l'objectif de microscope.

D'autres caractéristiques non limitatives et avantageuses de l'appareil de micro-spectrométrie à balayage de faisceau lumineux conforme à l'invention, prises individuellement ou selon toutes les combinaisons techniquement possibles, sont les suivantes :
- le premier composant optique focalisant est un miroir torique ;
- le premier composant optique focalisant à miroir torique est adapté pour réduire des aberrations optiques géométriques dans le plan focal intermédiaire ;
- le premier composant optique focalisant comporte au moins une lentille ;
- le premier composant optique focalisant est monté sur un rail de guidage adapté pour ajuster la distance entre le premier composant optique focalisant et l'objectif de microscope ;
- l'autre composant optique focalisant est un miroir sphérique, un miroir torique ou une lentille ;
- l'autre composant optique focalisant est monté sur un autre rail de guidage adapté pour ajuster la distance entre l'autre composant optique focalisant et l'objectif de microscope ;
- le miroir de balayage est disposé pour recevoir le faisceau lumineux d'excitation sous un angle d'incidence inférieur ou égal à 15 degrés ;
- l'appareil comporte en outre un premier miroir plan de renvoi et/ou un autre miroir plan de renvoi, le premier miroir plan de renvoi étant disposé en amont du premier composant optique focalisant, et/ou respectivement, l'autre miroir plan de renvoi étant disposé entre l'autre composant optique focalisant et l'objectif de microscope ;
- la platine orientable comporte un actionneur à deux axes de rotation de type piézoélectrique ou bobine acoustique ;
- ladite au moins une source de lumière comprend une ou plusieurs sources de type source laser et/ou diode électroluminescente ;
- l'appareil de micro-spectrométrie comporte une ouverture confocale disposée en amont du premier composant optique focalisant, le faisceau lumineux d'excitation incident sur le premier composant optique focalisant étant collimaté ;
- le système de détection spectrométrique comporte un spectromètre Raman, un spectromètre Raman cohérent anti-Stokes, un spectromètre de fluorescence, un spectromètre de photoluminescence, un spectromètre de cathodo-luminescence, une caméra hyperspectrale, un filtre spectral ou un filtre passe-bande accordable ;
- le système de détection spectrométrique est adapté pour mesurer et analyser le faisceau lumineux formé par réflexion, diffusion et/ou transmission en fonction d'un déplacement du faisceau lumineux d'excitation sur l'échantillon ;
- l'objectif de microscope est un objectif en réflexion totale interne et l'autre composant optique focalisant est adapté pour former une image du plan focal intermédiaire dans le plan focal objet de l'objectif en réflexion totale interne, de manière à déplacer angulairement le faisceau lumineux d'excitation collimaté dans le plan focal image et à collecter un faisceau lumineux en réflexion totale interne sur l'échantillon.

L'invention propose également un procédé de micro-spectrométrie à balayage de faisceau lumineux comprenant les étapes suivantes : émettre un faisceau lumineux d'excitation au moyen d'une source de lumière ; diriger le faisceau lumineux d'excitation vers un premier composant optique focalisant et réfléchir le faisceau lumineux d'excitation sur un seul miroir de balayage plan, de manière à focaliser le faisceau lumineux d'excitation en un point de focalisation dans un plan focal intermédiaire après réflexion du faisceau lumineux d'excitation sur le miroir de balayage, diriger le faisceau lumineux d'excitation vers un autre composant optique focalisant puis un objectif de microscope, de manière à former une image du plan focal intermédiaire dans le plan focal objet ou, respectivement, dans le plan focal image de l'objectif de microscope, et incliner le miroir de balayage suivant deux axes de rotation transverses pour déplacer le point de focalisation suivant deux directions transverses dans le plan focal intermédiaire, de manière à déplacer l'image du point de focalisation suivant deux directions transverses dans le plan focal objet ou, respectivement, dans le plan focal image de l'objectif de microscope de manière à former un faisceau lumineux d'excitation en un point déterminé ou, respectivement, sous un angle d'incidence déterminé dans le plan image de l'objectif de microscope ; collecter un faisceau lumineux formé par réflexion, diffusion et/ou transmission du faisceau lumineux d'excitation, et recevoir le faisceau lumineux formé par réflexion, diffusion et/ou transmission sur un système de détection spectrométrique.

Le système et le procédé de déplacement du faisceau lumineux d'excitation selon l'invention, permettent de positionner et/ou de balayer la position ou l'inclinaison du faisceau lumineux d'excitation dans le plan focal avant d'un objectif de microscope. Le système de déplacement est basé sur un seul et unique miroir de balayage. Ce système est plus simple, plus rapide et moins coûteux que les systèmes de l'art antérieur basés sur au moins deux miroirs de balayage disposés en série. De plus, ce système de déplacement offre une solution alternative pour résoudre le problème de vignettage de faisceau lors du balayage de faisceau.

Le système et le procédé de l'invention sont compatibles pour des mesures de spectrométrie par réflexion, transmission, diffusion vers l'arrière ou vers l'avant.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

La description qui va suivre en regard des dessins annexés, donnés à titre d'exemples non limitatifs, fera bien comprendre en quoi consiste l'invention et comment elle peut être réalisée. De plus, diverses autres caractéristiques de l'invention ressortent de la description annexée effectuée en référence aux dessins qui illustrent des formes, non limitatives, de réalisation de l'invention et où :
[Fig. 1] représente schématiquement un système de balayage de faisceau suivant un premier mode de réalisation de l'invention,
[Fig. 2] représente schématiquement un miroir plan monté sur une platine orientable suivant deux axes de rotation transverses,
[Fig. 3] représente un exemple de balayage de faisceau dans le plan focal image de l'objectif de microscope,
[Fig. 4] représente un autre exemple de balayage de faisceau dans le plan focal objet de l'objectif de microscope,
[Fig. 5] illustre une variante du premier mode de réalisation dans laquelle le système de balayage de faisceau est utilisé pour des mesures en transmission,
[Fig. 6] illustre une autre variante du premier mode de réalisation dans laquelle le système de balayage de faisceau est combiné avec un spectromètre pour des mesures de spectrométrie par transmission,
[Fig. 7] illustre encore une autre variante du premier mode de réalisation dans laquelle le système de balayage de faisceau est combiné avec un détecteur à deux dimensions pour des mesures en transmission,
[Fig. 8] illustre encore une autre variante du premier mode de réalisation dans laquelle le système de balayage de faisceau est utilisé à la fois sur le faisceau incident et sur le faisceau transmis.

Il est à noter que sur ces figures les éléments structurels et/ou fonctionnels communs aux différentes variantes peuvent présenter les mêmes références.

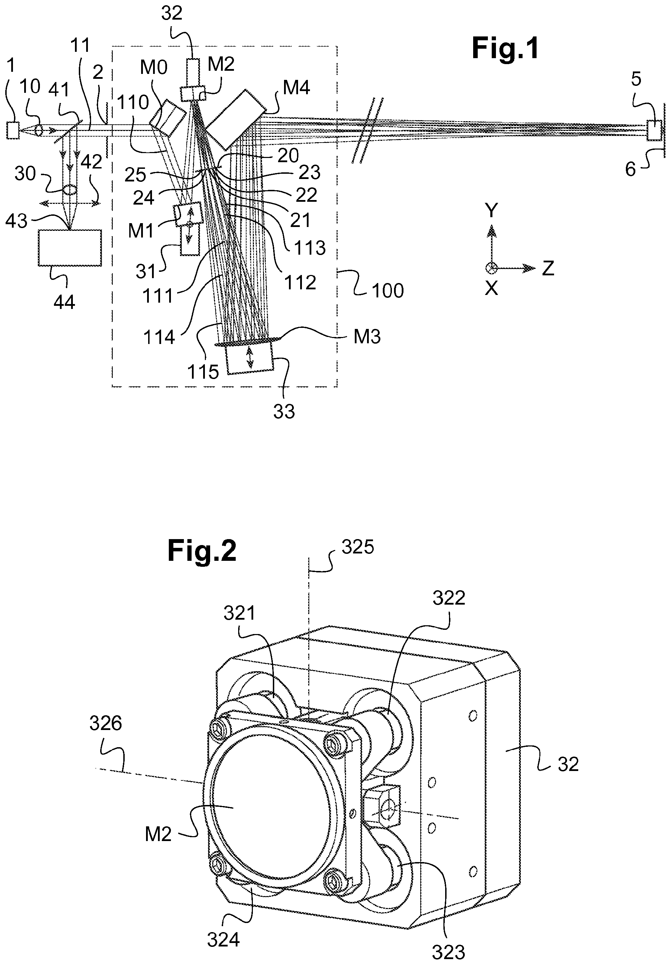

Sur la figure 1, on a représenté un système de balayage de faisceau 100 destiné à être inséré entre une source de lumière 1 et un objectif de microscope 5.

On a représenté un repère orthonormé (XYZ). Le plan de la figure 2 est le plan (YZ).

A titre d'exemple non limitatif, le microscope est de type confocal et comporte une ouverture confocale 43. L'ouverture confocale 43 est disposée sur un plan conjugué au plan focal de l'objectif de microscope 5. Par exemple, l'ouverture confocale 43 est disposée dans un plan au foyer d'une lentille 42.

Le système de balayage comporte ici un premier miroir de renvoi M0, un premier miroir focalisant M1, un miroir de balayage M2, un deuxième miroir focalisant M3 et un deuxième miroir de renvoi M4.

Les miroirs de renvoi M0 et M4 sont des miroirs plans. Les miroirs de renvoi M0 et M4 servent simplement à replier le faisceau lumineux d'excitation tout en conservant l'alignement optique entre le faisceau lumineux d'excitation 10 et l'objectif de microscope 5 suivant l'axe optique principal 11 du microscope.

De façon avantageuse, le système de balayage de faisceau 100 de la figure 1 forme un module optionnel pouvant être inséré dans et/ou retiré de la partie confocale du microscope, entre un diaphragme 2 et l'objectif de microscope 5. Le faisceau lumineux d'excitation 10 est collimaté et se propage suivant une direction parallèle à l'axe Z. De façon particulièrement avantageuse, l'insertion ou le retrait du module optionnel dans la partie confocale du microscope ne modifie pas l'ajustement optique du microscope confocal. Le module optionnel peut être inséré ou retiré selon les besoins, sans modifier l'alignement optique de la source lumineuse 1, de l'ouverture confocale 43 et de l'objectif 5.

Le premier miroir de renvoi M0 reçoit le faisceau lumineux d'excitation 10 collimaté et le réfléchit en direction du premier miroir focalisant M1. A titre d'exemple, le premier miroir de renvoi M0 a des dimensions d'au moins 15 mm x 15 mm et une épaisseur de 6 mm.

De façon avantageuse, le premier miroir de renvoi M0 est monté sur un support classique point-trait-plan avec accès aux vis de réglage côté face avant du miroir M0. Pour un réglage fin, une amplitude de réglage de +/- 1 degré est suffisante sur deux axes de rotation, par exemple un axe de rotation parallèle à l'axe X et l'autre transverse à l'axe X. De façon avantageuse, le premier miroir de renvoi M0 est ajustable en position sur une profondeur de +/- 1mm suivant la normale au miroir de renvoi M0. L'angle d'incidence du faisceau lumineux d'excitation 10, par rapport à la normale au miroir M0, est de préférence ajustable dans une gamme entre 51 degrés et 57 degrés, par exemple à une valeur d'environ 54 degrés. Après réflexion sur le miroir de renvoi M0, le faisceau lumineux d'excitation 10 se propage suivant l'axe optique 110.

Le premier miroir focalisant M1 est de préférence un miroir torique ou toroïdal. Le premier miroir focalisant M1 a un premier rayon de courbure r1 autour de l'axe Z et un deuxième rayon de courbure r2 autour de l'axe X. Le premier miroir focalisant M1 est par exemple de forme rectangulaire, avec des dimensions d'au moins 15 mm x 10 mm et une épaisseur de 6 mm. L'angle d'incidence du faisceau lumineux d'excitation 10 par rapport à la normale au premier miroir focalisant M1 est d'environ 11 degrés. Le premier miroir focalisant M1 a pour effet de focaliser le faisceau lumineux d'excitation 10 en un point focal dans un plan focal intermédiaire 20 disposé transversalement à l'axe optique. De plus, la forme torique du premier miroir focalisant M1 est calculée et fabriquée de manière à corriger les aberrations sphériques induites par les miroirs M1 et M3 dans le plan focal 6.

De façon avantageuse, le premier miroir focalisant M1 est monté sur un support classique point-trait-plan avec accès aux vis de réglage sur l'arrière du miroir M1. Pour un réglage fin, une amplitude de réglage de +/- 1 degré est suffisante sur deux axes de rotation, par exemple un axe de rotation parallèle à l'axe X et l'autre transverse à l'axe X. De façon avantageuse, on dispose également d'un réglage fin en profondeur de +/-1,5 mm suivant la normale au miroir. De plus, il est souhaitable de disposer d'une rotation du miroir M1 afin d'ajuster, grossièrement et/ou finement, l'angle d'incidence du faisceau lumineux d'excitation sur le miroir M1 à une valeur comprise dans la gamme de 8 degrés à 14 degrés environ par rapport à l'axe optique 110.

Selon une variante, le premier miroir focalisant M1 est monté sur un rail de guidage 31 en translation orienté suivant un axe perpendiculaire à l'axe optique 11 (dans le plan YZ) autrement dit selon l'axe Y. Le déplacement du premier miroir focalisant M1 sur ce rail de guidage 31 permet d'ajuster la distance entre le premier miroir focalisant M1 et le principal axe optique 11 du microscope. A titre d'exemple non limitatif, un réglage grossier sur la profondeur du miroir M1 permet d'ajuster la position du premier miroir focalisant M1 à une distance d'environ 50 mm (-17mm/+33mm) du principal axe optique 11 du microscope.

L'unique miroir de balayage M2 est disposé sur le trajet optique du faisceau lumineux d'excitation 10 entre le premier miroir focalisant M1 et le plan focal intermédiaire 20.

Ainsi, le premier miroir focalisant M1 reçoit le faisceau lumineux d'excitation 10 collimaté et le réfléchit en direction du miroir de balayage M2 tout en focalisant le faisceau lumineux d'excitation 10 en un point focal 21 dans le plan focal intermédiaire 20.

La figure 2 illustre un exemple de miroir de balayage M2 monté sur une platine 32 à deux axes de rotation 325, 326 transverses. Le miroir de balayage M2 est un miroir plan. Les deux axes de rotation 325, 326 sont dans le plan du miroir de balayage M2. Par exemple, un des axes de rotation 325 est parallèle à l'axe X et l'autre axe de rotation 326 est approximativement parallèle à l'axe Z. Des actionneurs 321, 322, 323, 324 permettent d'effectuer une rotation du miroir M2 autour de l'axe de rotation 325 et/ou 326. Selon un mode de réalisation préféré, les actionneurs 321, 322, 323, 324 sont de type piézoélectrique ou bobine acoustique (voice coil).

L'angle d'incidence du faisceau lumineux d'excitation 10 sur le miroir de balayage M2 est de préférence inférieur ou égal à 15 degrés, par exemple d'environ 8 degrés.

Une rotation du miroir M2 autour de l'axe de rotation 325, parallèle à l'axe X, a pour effet de déplacer le point focal 21 dans le plan focal intermédiaire 20 vers un autre point focal 22, 23, 24 ou 25 transversalement à l'axe X. En première approximation, les points focaux 21, 22, 23, 24 et 25 sont situés dans le plan focal intermédiaire 20. De manière analogue, une rotation du miroir M2 autour de l'axe de rotation 326, parallèle à l'axe Z, a pour effet de déplacer le point focal 21 dans le plan focal intermédiaire 20 transversalement à l'axe Z. De cette manière, le miroir de balayage M2 permet de déplacer le point focal 21 dans le plan focal intermédiaire 20 suivant deux directions transverses au plan focal intermédiaire. Le premier miroir focalisant M1 est adapté pour corriger les aberrations sphériques induites par les miroirs M1 et M3.

Dans l'exemple illustré sur la figure 1, lorsque le miroir M2 focalise le faisceau lumineux au point focal 21, le faisceau lumineux incident se propage suivant l'axe optique 111. De manière analogue, lorsque le miroir M2 focalise le faisceau lumineux respectivement au point focal 22, 23, 24 ou 25, le faisceau lumineux incident se propage respectivement suivant l'axe optique 112, 113, 114 ou 115.

L'amplitude de rotation lors d'un balayage du miroir M2 est d'environ 6 degrés suivant chaque axe de rotation.

Le deuxième miroir focalisant M3 est de préférence un miroir sphérique. Dans l'exemple illustré sur la figure 1, le deuxième miroir focalisant M3 a un rayon de courbure de 300 mm. La position et les dimensions du deuxième miroir focalisant M3 sont déterminées en fonction de l'ouverture de l'objectif de microscope 5 et de la gamme de balayage du miroir M2 de manière à limiter les effets de vignettage du faisceau lumineux sur les bords du miroir M3. L'angle d'incidence du faisceau lumineux d'excitation 10 par rapport à la normale au deuxième miroir focalisant M3 est d'environ 6 degrés. Le deuxième miroir focalisant M3 permet de collecter le faisceau lumineux incident réfléchi par le miroir de balayage M2 quelle que soit la position du point focal dans le plan focal intermédiaire lors d'un balayage du miroir de balayage M2. Le deuxième miroir focalisant M3 réfléchit le faisceau lumineux incident en direction du deuxième miroir de renvoi M4 et/ou de l'objectif de microscope 5. En variante, le deuxième miroir focalisant M3 est un miroir torique. Dans ce cas, le miroir M1 corrige une partie des aberrations optiques et le deuxième miroir focalisant M3 est adapté pour corriger l'autre partie des aberrations optiques.

De façon avantageuse, le deuxième miroir focalisant M3 est monté sur un support classique point-trait-plan avec accès aux vis de réglage sur l'arrière du miroir M3. Pour un réglage fin, une amplitude de réglage de +/- 1 degré est suffisante sur deux axes de rotation, par exemple un axe de rotation parallèle à l'axe X et l'autre transverse à l'axe X. De façon avantageuse, on dispose également d'un réglage fin en profondeur de +/-1,5 mm. De plus, il est souhaitable de disposer d'une rotation du miroir M3 afin d'ajuster, grossièrement et/ou finement, l'angle d'incidence du faisceau lumineux d'excitation sur le miroir M3 à une valeur comprise dans la gamme de 5,75 degrés à 7,5 degrés environ par rapport à l'axe optique 110.

Selon une variante, le deuxième miroir focalisant M3 est monté sur un rail de guidage 33 en translation. Le déplacement du deuxième miroir focalisant M3 sur ce rail de guidage 33 permet d'ajuster la distance entre le deuxième miroir focalisant M3 et le principal axe optique 11 du microscope. A titre d'exemple non limitatif, un réglage grossier sur la profondeur du miroir M3 permet d'ajuster la position du deuxième miroir focalisant M3 à une distance d'environ 50 mm du principal axe optique 11 du microscope.

Le deuxième miroir focalisant M3 reçoit un faisceau incident focalisé en un point 21, 22, 23, 24 ou 25 du plan focal intermédiaire et réfléchit ce faisceau lumineux en direction du deuxième miroir de renvoi M4 ou directement vers l'objectif de microscope 5 dans le cas où on n'utilise pas de miroir de renvoi M4.

Le deuxième miroir focalisant M3 permet de ramener l'image du miroir de balayage M2 sur la pupille de l'objectif de microscope 5. Le deuxième miroir focalisant M3 limite ainsi les effets de vignettage par l'objectif de microscope 5 lorsque l'orientation du miroir de balayage M2 varie.

Dans l'exemple illustré sur la figure 1, le deuxième miroir de renvoi M4 reçoit un faisceau lumineux d'excitation et le réfléchit en direction de l'objectif de microscope 5. A titre d'exemple, le deuxième miroir de renvoi M4 est de forme rectangulaire de 30 mm x 45 mm et a une épaisseur de 6 mm.

De façon avantageuse, le deuxième miroir de renvoi M4 est monté sur un support classique point-trait-plan avec accès aux vis de réglage côté face avant du miroir M4. Pour un réglage fin, une amplitude de réglage de +/- 1 degré est suffisante sur deux axes de rotation, par exemple un axe de rotation parallèle à l'axe X et l'autre transverse à l'axe X. De façon avantageuse, le deuxième miroir de renvoi M4 est ajustable en position sur une profondeur de +/- 1mm suivant la normale au miroir de renvoi M4. L'angle d'incidence d'un faisceau lumineux d'excitation, par rapport à la normale au miroir M4, est variable en fonction du balayage du miroir M2 dans une gamme de quelques degrés, selon la distance entre le miroir de renvoi M4 et l'objectif de microscope 5. Après réflexion sur le deuxième miroir de renvoi M4, le faisceau lumineux d'excitation se propage avec un angle variable par rapport au principal axe optique 11 de l'objectif de microscope 5, en fonction de l'angle d'inclinaison du miroir de balayage M2.

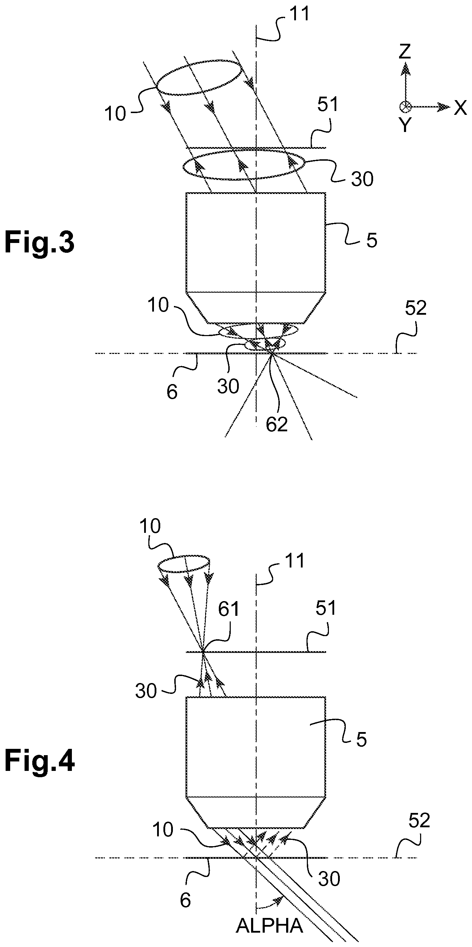

Dans un premier mode de réalisation, illustré sur les figures 1 et 3, le deuxième miroir focalisant M3 est disposé à une distance prédéterminée du plan focal intermédiaire 20 de manière à recevoir le faisceau incident focalisé en un point 21, 22, 23, 24 ou 25 du plan focal intermédiaire et à former un faisceau lumineux collimaté. Ainsi, l'objectif de microscope 5 reçoit un faisceau lumineux collimaté ayant une inclinaison variable en fonction du balayage du miroir M2 suivant un ou deux axes de rotation transverses à l'axe optique 11 de l'objectif de microscope. Le deuxième miroir focalisant M3 collimate le faisceau lumineux issu d'un point du plan de focalisation intermédiaire 20. Le deuxième miroir de renvoi réfléchit le faisceau collimaté en direction de l'objectif de microscope 5. Par conséquent, dans le plan focal objet 51 de l'objectif de microscope 5, le faisceau lumineux incident reste collimaté (voir figure 3). Le plan focal objet 51 est aussi appelé plan focal arrière. L'objectif de microscope 5 focalise le faisceau lumineux incident 10 en un point 62 du plan focal image 52 de l'objectif de microscope 5. Le plan focal image 52 est aussi appelé plan focal avant. Ainsi, l'inclinaison angulaire du miroir de balayage M2 permet de déplacer le point 62 dans le plan focal image 52 de l'objectif de microscope 5 suivant les directions X et/ou Y. On peut ainsi scanner une zone du plan focal image 52 du microscope en modifiant l'inclinaison d'un seul miroir de balayage M2, les autres miroirs M0, M1, M2 et M3 restant fixes.

Dans le premier mode de réalisation, le premier miroir focalisant M1 et le deuxième miroir focalisant M3 forment un système optique afocal.

En résumé, dans le premier mode de réalisation, le système de déplacement 100 du faisceau lumineux d'excitation permet de déplacer le point de focalisation 62 dans le plan focal avant 52 suivant deux directions spatiales (X, Y) transverses à l'axe optique 11 de l'objectif de microscope.

Le faisceau lumineux incident 10 peut être utilisé comme faisceau d'excitation pour générer un faisceau lumineux par rétro-diffusion, transmission ou réflexion.

Une application particulièrement intéressante concerne la fluorescence ou la diffusion Raman. Dans ce cas, la source de lumière 1 est avantageusement une source laser.

Dans une configuration de mesure de rétro-diffusion Raman, l'objectif de microscope 5 collecte un faisceau lumineux rétro-diffusé ou réfléchi 30 formé par rétro-diffusion ou réflexion du faisceau laser d'excitation 10 en un point 62 d'un échantillon 6. Le faisceau lumineux 30 collecté suit le chemin inverse du faisceau laser d'excitation par réflexions successives sur les miroirs M4, M3, M2, M1 et M0. Un composant optique 41, de type lame semi-réfléchissante ou lame dichroïque, permet de séparer le faisceau laser d'excitation 10 du faisceau lumineux rétro-diffusé ou réfléchi 30. Dans le cas d'un microscope confocal, le faisceau lumineux 30 collecté passe à travers l'ouverture confocale 43.

Un composant optique, par exemple une lentille 42, focalise le faisceau lumineux rétro-diffusé ou réfléchi 30 sur la fente d'entrée d'un spectromètre 44.

Ainsi, le système de balayage de faisceau 100 permet de transformer un microscope confocal en un microscope de fluorescence ou un microscope Raman à balayage de faisceau, sans modifier les réglages optiques du microscope confocal.

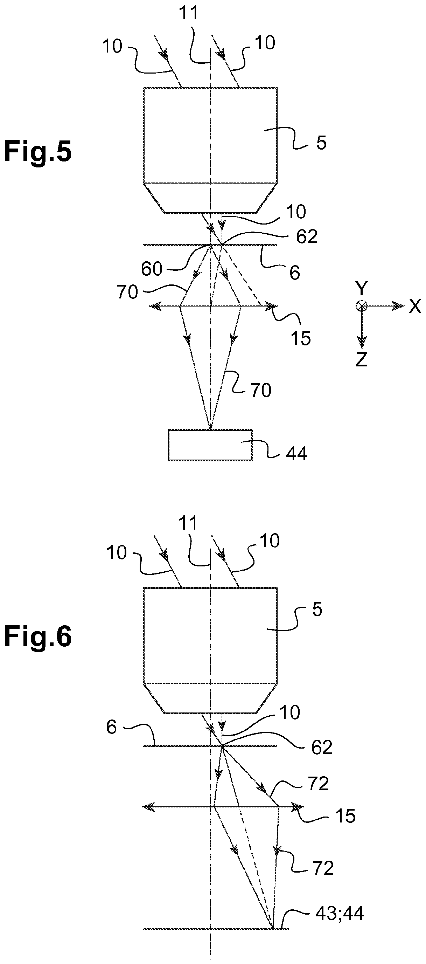

Dans d'autres applications du premier mode de réalisation, illustrées sur les figures 5 à 8, on effectue des mesures par transmission en combinaison avec le même le système de déplacement 100 du faisceau lumineux d'excitation que décrit ci-dessus. Le système de balayage de faisceau 100 disposé sur le chemin optique du faisceau lumineux d'excitation 10 n'est pas représenté sur les figures 5 à 8.

Selon une première variante, illustrée sur la figure 5, on utilise un autre objectif 15 pour collecter un faisceau lumineux transmis 70. Le système de déplacement 100 permet de déplacer le point de focalisation 62 dans le plan focal avant 52 de l'objectif de microscope suivant deux directions transverses à l'axe optique 11 de l'objectif de microscope. Dans cette variante, l'autre objectif 15 collecte seulement un signal provenant d'un point 60 sur l'axe optique 11 au centre du champ de l'objectif 15, quelle que soit la position du point d'excitation, autrement dit quelle que soit la position en (X, Y) du point de focalisation 62. L'objectif 15 focalise le faisceau transmis 70 sur un spectromètre 44 ou directement sur un détecteur.

Une application de cette première variante permet par exemple de mesurer la propagation d'un faisceau lumineux dans un guide d'onde planaire. A cet effet le guide d'onde est placé dans le plan de l'échantillon 6, on excite une extrémité du guide d'onde en un point d'excitation 62 situé à distance de l'axe optique et on collecte le signal par transmission à une autre extrémité du guide d'onde située sur l'axe optique 11.

Une autre application de cette première variante consiste à mesurer la globalité du faisceau transmis 70 dans le champ de l'objectif 5, en balayant rapidement la surface de l'échantillon et en collectant l'intégralité du faisceau transmis 70 afin d'avoir une information intégrée surtout le volume ou toute la surface de l'échantillon.

Selon une deuxième variante, illustrée sur la figure 6, on utilise l'autre objectif 15 pour collecter un faisceau lumineux transmis 72 provenant de n'importe quel point de focalisation 62. Dans un exemple particulier d'application de cette deuxième variante, on déplace le point d'excitation 62 selon une seule direction dans le plan de l'échantillon (par exemple X ou Y) et on collecte le faisceau transmis 72 suivant la longueur de la fente d'entrée d'un spectromètre 44 en fonction de la position du point d'excitation 62 suivant la direction de balayage.

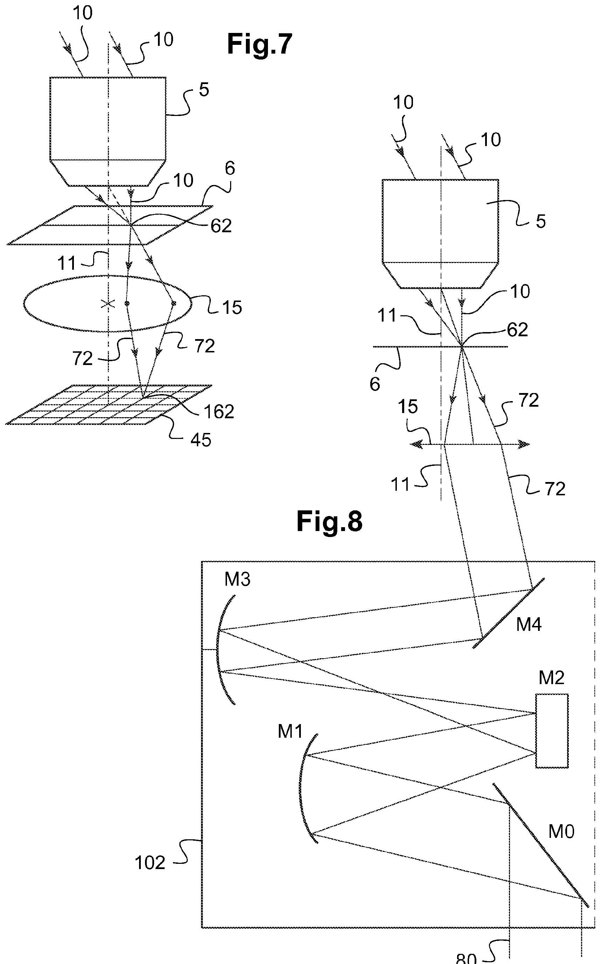

Selon une troisième variante, illustrée sur la figure 7, on utilise l'autre objectif 15 pour collecter le faisceau lumineux transmis 72 provenant d'un point de d'excitation 62 et pour faire l'image du faisceau transmis 72 sur un détecteur 45 matriciel à 2 dimensions. En déplaçant le point d'excitation 62 sur l'échantillon dans le plan XY, on forme ainsi une image de l'échantillon par transmission en fonction du point d'excitation 62. Cette variante s'applique en particulier à la mesure en microscopie confocale en intensité, par exemple par mesure de transmission de l'échantillon en chaque point, ou en microscopie hyperspectrale en utilisant une caméra hyperspectrale. Pour obtenir de l'information spectrale, il convient d'ajouter un filtre afin de sélectionner une bande spectrale particulière. Ce filtre peut avoir une bande spectrale fixe et être remplacé par un autre filtre pour changer de gamme spectrale. De façon alternative, le filtre est un filtre passe-bande accordable.

Selon une quatrième variante, illustrée sur la figure 8, on utilise un deuxième système de balayage de faisceau 102 disposé sur le chemin optique du faisceau transmis 72 qui ici est collimaté par l'autre objectif 15. Le deuxième système de balayage de faisceau 102 comporte des composants optiques M4, M3, M2, M1 et M0 analogues à ceux du système de balayage de faisceau 100 disposé sur le chemin optique du faisceau lumineux d'excitation 10. De plus, on synchronise les deux miroirs de balayage M2 des deux systèmes de balayage de faisceau 100 et 102. En sortie du deuxième système de balayage de faisceau 102, le faisceau transmis 80 a une direction fixe, quelle que soit la position du point d'excitation 62 dans le plan XY de l'échantillon. Le faisceau transmis 80 est ensuite envoyé sur un spectromètre ou un détecteur.

Dans un deuxième mode de réalisation, illustré sur la figure 4, le deuxième miroir focalisant M3 est disposé à une distance prédéterminée du plan focal intermédiaire 20 de manière à recevoir le faisceau lumineux d'excitation 10 focalisé en un point 21, 22, 23, 24 ou 25 du plan focal intermédiaire 20 et à former un faisceau lumineux focalisé en un point 61 dans le plan focal objet 51 de l'objectif de microscope 5. L'inclinaison variable suivant deux axes de rotation du miroir de balayage M2 permet de modifier la position en XY du point 61 dans le plan focal objet 51. Ainsi, l'objectif de microscope 5 reçoit un faisceau lumineux focalisé et forme un faisceau lumineux collimaté dans le plan focal image 52, ayant une inclinaison variable en fonction du balayage du miroir M2 suivant un ou deux axes de rotation transversalement à l'axe optique 11 de l'objectif de microscope. Autrement dit, le deuxième miroir focalisant M3 forme une image du plan focal intermédiaire 20 dans le plan focal objet 51 de l'objectif de microscope 5. Le deuxième miroir de renvoi M4 réfléchit le faisceau collimaté en direction de l'objectif de microscope 5. Par conséquent, dans le plan focal objet 51 de l'objectif de microscope 5, le faisceau lumineux incident est focalisé (voir figure 4). L'objectif de microscope 5 collimate le faisceau lumineux incident 10 dans le plan focal image 52 de l'objectif de microscope 5. Ainsi, l'inclinaison angulaire du miroir de balayage M2 permet d'ajuster et/ou de modifier l'angle d'inclinaison ALPHA du faisceau lumineux d'excitation 10 dans le plan focal image 52 de l'objectif de microscope 5 par rapport à deux axes de rotation transverses au principal axe optique 11.

On peut ainsi ajuster l'angle d'inclinaison ALPHA du faisceau lumineux d'excitation dans le plan focal image 52 du microscope en ajustant l'inclinaison d'un seul miroir de balayage M2, les autres miroirs M0, M1, M2 et M3 restant fixes. L'objectif de microscope 5 collecte un faisceau lumineux réfléchi 30 ou rétro-diffusé sur l'échantillon 6.

Dans le deuxième mode de réalisation, le premier miroir focalisant M1, le deuxième miroir focalisant M3 et l'objectif de microscope 5 forment un système optique afocal.

Dans le deuxième mode de réalisation, le système de déplacement 100 du faisceau lumineux d'excitation permet d'ajuster ou de balayer l'angle d'inclinaison ALPHA du faisceau lumineux d'excitation collimaté dans le plan focal avant 52 suivant deux axes de rotation transverses à l'axe optique 11 de l'objectif de microscope.

Dans ce deuxième mode de réalisation, le diamètre du faisceau à la sortie de l'objectif 5 dépend principalement du diamètre du faisceau (par exemple de 4mm) à l'entrée du système de balayage de faisceau 100, de la distance entre le miroir M3 et le plan focal intermédiaire 20 (par exemple d'environ 200 mm) et du grossissement de l'objectif (par exemple 100X). Dans cet exemple, le diamètre du faisceau à la sortie de l'objectif 5 est d'environ 20µm, ce qui détermine la résolution spatiale latérale en XY, par contre cela permet d'avoir une résolution axiale extrême suivant l'axe Z pour les modes TIRF ou TIRR.

Dans une application du deuxième mode de réalisation, l'objectif de microscope 5 est un objectif de fluorescence par réflexion totale interne (TIRF pour Total Internai Reflectance Fluorescence). De manière analogue avec le premier mode de réalisation, le microscope est ainsi adapté pour effectuer des mesures de fluorescence par réflexion totale interne dans l'échantillon 6 sous un angle d'incidence ALPHA déterminé. Dans une autre application, l'objectif de microscope 5 est un objectif Raman par réflexion totale interne (TIRR pour Total Internal Reflectance Raman). Le microscope est ainsi adapté pour effectuer des mesures de spectrométrie Raman par réflexion totale interne dans l'échantillon 6 sous un angle d'incidence ALPHA déterminé en fonction de l'indice optique de l'échantillon afin d'obtenir la réflexion totale interne.

Selon une autre variante, l'inclinaison du miroir de balayage M2 est contrôlée de manière à ajuster ou scanner l'angle d'inclinaison ALPHA du faisceau lumineux d'excitation dans le plan focal image 52 du microscope, les autres miroirs M0, M1, M2 et M3 restant fixes. Dans une autre application, l'objectif de microscope 5 collecte un faisceau lumineux réfléchi sur l'échantillon 6. Le microscope est ainsi adapté pour effectuer des mesures ellipsométriques sous un angle d'incidence ALPHA déterminé ou en fonction de l'angle d'incidence ALPHA dans une gamme angulaire déterminée en fonction de l'ouverture numérique de l'objectif de microscope 5. Par exemple, la gamme angulaire de l'angle ALPHA s'étend de 0 à 72 degrés environ pour un objectif de microscope 5 ayant une ouverture numérique d'environ 0,95. De façon avantageuse dans l'application à l'ellipsométrie, la source de lumière 1 est choisie parmi une source monochromatique ou polychromatique pour des mesures à une ou quelques longueurs d'onde déterminées ou une source à spectre large pour des mesures spectroscopiques.

Selon un mode de réalisation particulier, les miroirs de renvoi M0 et/ou M4 peuvent être omis. Dans ce cas, l'axe optique du faisceau lumineux incident est généralement dévié par le système optique formé par le premier miroir focalisant M1, le miroir de balayage M2 et le deuxième miroir focalisant M3.

Selon une variante de l'un quelconque des modes de réalisation décrits ci-dessus, le premier miroir focalisant M1 est remplacé par un premier système optique focalisant à lentille L1. De façon particulièrement avantageuse, le premier système optique focalisant à lentille L1 est de préférence corrigé des aberrations sphériques dans le plan focal intermédiaire 20.

De façon alternative ou complémentaire, le deuxième miroir focalisant M3 est remplacé par un deuxième système optique focalisant à lentille L3 disposé entre le miroir de balayage M2 et l'objectif de microscope 5. Le deuxième système optique focalisant à lentille L3 peut être utilisé en combinaison avec un miroir M1 ou un système optique à lentille L1.

Un système de déplacement 100 combiné à un objectif de microscope 5 selon le premier mode de réalisation peut être utilisé pour positionner le point de mesure 62 en un point déterminé du plan focal avant, par exemple sur un échantillon 6. Le faisceau d'excitation forme un spot lumineux 62 apte à être déplacé et positionné précisément dans le plan focal avant de l'objectif de microscope en fonction de l'inclinaison du miroir de balayage M2 suivant un ou deux axes de rotation. De plus, par retour-inverse de la lumière, le système de déplacement 100 est adapté pour une collection confocale du signal réfléchi ou rétrodiffusé.

Selon un mode de réalisation particulier, comprenant un système de localisation de particule (particle finder en terminologie anglaise) par exemple basé sur un système de capture et de traitement d'image, on repère au préalable la position d'une ou de plusieurs particules sur une surface d'un échantillon et on positionne automatiquement le point de mesure 62 sur chaque particule afin de les mesurer une par une.

Dans une application dite microspot, on effectue une cartographie de l'échantillon pour différentes positions du point de mesure 62 en fonction d'une série d'angles d'inclinaison variables (suivant une ou deux directions) du miroir de balayage M2, avec une résolution spatiale microscopique. Dans cette application, chaque mesure est effectuée entre deux déplacements successifs. Par conséquent, la commande du miroir de balayage requiert de multiples démarrages et arrêts, ce qui implique une durée d'acquisition totale relativement élevée.

Le système de déplacement 100 est aussi adapté pour effectuer une série de mesures à une série d'instants prédéterminés, pendant un déplacement continu ou quasi-continu du spot sur l'échantillon, afin de limiter les temps morts entre deux mesures consécutives. Ce procédé de mesure à la volée (ou mode SWIFT) permet d'obtenir des mesures résolues spatialement plus rapidement que le mode microspot.

Dans une autre application dite macrospot, on intègre le signal détecté pendant un déplacement du spot 62 sur l'échantillon de manière à obtenir une mesure moyennée spatialement sur une surface plus grande que le spot laser 62. La forme du macrospot peut être prédéterminée, par exemple en forme de disque, d'anneau, carrée, rectangulaire, ou adaptée à la forme de l'objet considéré, par exemple à une forme biologique détectée par un système d'imagerie.

Selon encore une autre variante, on acquiert une série de mesures en déplaçant le point de mesure 62 suivant une ligne sur l'échantillon et on forme l'image de cette ligne dans la direction longitudinale de la fente d'entrée du spectromètre 44. Le spectromètre étant muni d'un détecteur de type caméra à deux dimensions, on obtient ainsi très rapidement une série de spectres suivant une ligne sur l'échantillon.

Un système de déplacement 100 combiné à un objectif de microscope 5 selon le deuxième mode de réalisation est adapté pour éclairer un échantillon avec un faisceau lumineux d'excitation collimaté sous un angle d'incidence ALPHA prédéterminé dans le plan focal avant. De façon particulièrement avantageuse, le même objectif de microscope 5 et le système de déplacement 100 sont utilisés pour collecter un faisceau lumineux formé par réflexion du faisceau d'excitation sur l'échantillon, le faisceau réfléchi formant un angle symétrique de l'angle ALPHA par rapport à l'axe optique 11 de l'objectif de microscope. Le système de déplacement 100 selon le deuxième mode de réalisation trouve des applications à la microspectrométrie de fluorescence par réflexion totale interne (TIRF) ou la microspectrométrie Raman par réflexion totale interne (TIRR) ou encore à l'ellipsométrie.

Le système de déplacement 100 selon le deuxième mode de réalisation est aussi adapté pour éclairer un échantillon avec un faisceau lumineux d'excitation collimaté sous un angle d'incidence ALPHA variable, afin de déterminer l'angle d'incidence ALPHA permettant d'obtenir la plus grande sensibilité pour des mesures de type TIRF, TIRR ou d'ellipsométrie.

Bien entendu, diverses autres modifications peuvent être apportées à l'invention dans le cadre des revendications annexées.

## Revendications

1. Appareil de micro-spectrométrie à balayage de faisceau lumineux comprenant au moins une source de lumière (1) adaptée pour émettre un faisceau lumineux d'excitation (10), un objectif de microscope (5) disposé suivant un axe optique principal (11) de l'appareil de micro-spectrométrie, l'objectif de microscope (5) ayant un plan focal objet (51) et un plan focal image (52), un système de déplacement (100) du faisceau lumineux d'excitation suivant deux directions spatiales (X, Y) transverses à l'axe optique du faisceau, l'objectif de microscope (5) et le système de déplacement (100) étant adaptés pour déplacer le faisceau lumineux d'excitation (10) sur un échantillon et un système optique (5, 15) adapté pour collecter un faisceau lumineux (30, 70, 72) formé par réflexion, diffusion et/ou transmission du faisceau lumineux d'excitation (10) sur l'échantillon, et un système de détection spectrométrique adapté pour recevoir le faisceau lumineux (30, 70, 72) formé par réflexion, diffusion et/ou transmission, **caractérisé en ce que** le système de déplacement (100) du faisceau lumineux d'excitation (10) comprend : un premier composant optique focalisant (M1, L1) adapté pour recevoir et focaliser le faisceau lumineux d'excitation (10) en un point de focalisation (21) dans un plan focal intermédiaire (20), un autre composant optique focalisant (M3, L3) disposé sur un trajet optique du faisceau entre le plan focal intermédiaire (20) et l'objectif de microscope (5), l'autre composant optique focalisant (M3, L3) étant adapté pour former une image du plan focal intermédiaire (20) dans le plan focal objet (51) ou, respectivement, dans le plan focal image (52) de l'objectif de microscope (5), et un seul miroir de balayage (M2) disposé sur le trajet optique du faisceau lumineux d'excitation, le miroir de balayage (M2) étant plan et monté sur une platine orientable autour de deux axes de rotation transverses, les deux axes de rotation étant dans le plan du miroir de balayage (M2), le miroir de balayage (M2) étant adapté pour déplacer le point de focalisation (21) suivant deux directions transverses dans le plan focal intermédiaire (20) de manière à déplacer l'image du point de focalisation (61, 62) suivant deux directions transverses dans le plan focal objet (51) ou, respectivement, dans le plan focal image (52) de l'objectif de microscope (5), **caractérisé en ce que** le miroir de balayage (M2) est disposé sur le trajet optique du faisceau lumineux d'excitation entre le premier composant optique focalisant (M1, L1) et le plan focal intermédiaire (20).

2. Appareil de micro-spectrométrie à balayage de faisceau lumineux selon la revendication 1 dans lequel le premier composant optique focalisant (M1, L1) est un miroir torique.

3. Appareil de micro-spectrométrie à balayage de faisceau lumineux selon la revendication 2 dans lequel le miroir torique (M1) est adapté pour réduire des aberrations optiques géométriques dans le plan focal intermédiaire (20).

4. Appareil de micro-spectrométrie à balayage de faisceau lumineux selon la revendication 1 dans lequel le premier composant optique focalisant (M1, L1) comporte au moins une lentille.

5. Appareil de micro-spectrométrie à balayage de faisceau lumineux selon l'une des revendications 1 à 4 dans lequel le premier composant optique focalisant (M1, L1) est monté sur un rail de guidage (31) adapté pour ajuster la distance entre le premier composant optique focalisant (M1, L1) et l'objectif de microscope (5).

6. Appareil de micro-spectrométrie à balayage de faisceau lumineux selon l'une des revendications 1 à 5 dans lequel l'autre composant optique focalisant (M3, L3) est un miroir sphérique, un miroir torique ou une lentille.

7. Appareil de micro-spectrométrie à balayage de faisceau lumineux selon l'une des revendications 1 à 6 dans lequel l'autre composant optique focalisant (M3, L3) est monté sur un autre rail de guidage (33) adapté pour ajuster la distance entre l'autre composant optique focalisant (M3, L3) et l'objectif de microscope (5).

8. Appareil de micro-spectrométrie à balayage de faisceau lumineux selon l'une des revendications 1 à 7 dans lequel le miroir de balayage (M2) est disposé pour recevoir le faisceau lumineux d'excitation (10) sous un angle d'incidence inférieur ou égal à 15 degrés.

9. Appareil de micro-spectrométrie à balayage de faisceau lumineux selon l'une des revendications 1 à 8 comportant en outre un premier miroir plan de renvoi (M0) et/ou un autre miroir plan de renvoi (M4), le premier miroir plan de renvoi (M0) étant disposé en amont du premier composant optique focalisant (M1, L1), et/ou respectivement, l'autre miroir plan de renvoi (M4) étant disposé entre l'autre composant optique focalisant (M3, L3) et l'objectif de microscope (5).

10. Appareil de micro-spectrométrie à balayage de faisceau lumineux selon l'une des revendications 1 à 9 dans lequel la platine orientable comporte un actionneur (25) à deux axes de rotation de type piézoélectrique ou bobine acoustique.

11. Appareil de micro-spectrométrie à balayage de faisceau lumineux selon l'une des revendications 1 à 10 dans lequel ladite au moins une source de lumière (1) comprend une ou plusieurs sources de type source laser et/ou diode électroluminescente.

12. Appareil de micro-spectrométrie à balayage de faisceau lumineux selon l'une des revendications 1 à 11, dans lequel l'appareil de micro-spectrométrie comporte une ouverture confocale (43) disposée en amont du premier composant optique focalisant (M1, L1), le faisceau lumineux d'excitation (10) incident sur le premier composant optique focalisant (M1, L1) étant collimaté.

13. Appareil de micro-spectrométrie à balayage de faisceau lumineux selon l'une des revendications 1 à 12 dans lequel le système de détection spectrométrique comporte un spectromètre Raman, un spectromètre Raman cohérent anti-Stokes, un spectromètre de fluorescence, un spectromètre de photoluminescence, un spectromètre de cathodo-luminescence, une caméra hyperspectrale, un filtre spectral ou un filtre passe-bande accordable.

14. Appareil de micro-spectrométrie à balayage de faisceau lumineux selon l'une des revendications 1 à 13 dans lequel l'objectif de microscope est un objectif en réflexion totale interne et dans lequel l'autre composant optique focalisant (M3, L3) est adapté pour former une image du plan focal intermédiaire (20) dans le plan focal objet de l'objectif en réflexion totale interne, de manière à déplacer angulairement le faisceau lumineux d'excitation collimaté dans le plan focal image (52) et à collecter un faisceau lumineux en réflexion totale interne sur l'échantillon.

15. Procédé de micro-spectrométrie à balayage de faisceau lumineux comprenant les étapes suivantes :émettre un faisceau lumineux d'excitation (10) au moyen d'une source de lumière ;diriger le faisceau lumineux d'excitation vers un premier composant optique focalisant (M1, L1) puis réfléchir le faisceau lumineux d'excitation sur un seul miroir de balayage (M2) plan, de manière à focaliser le faisceau lumineux d'excitation (10) en un point de focalisation (21) dans un plan focal intermédiaire (20) après réflexion du faisceau lumineux d'excitation sur le miroir de balayage (M2), diriger le faisceau lumineux d'excitation vers un autre composant optique focalisant (M3, L3) puis un objectif de microscope (5), de manière à former une image du plan focal intermédiaire (20) dans le plan focal objet (51) ou, respectivement, dans le plan focal image (52) de l'objectif de microscope (5), et incliner le miroir de balayage (M2) suivant deux axes de rotation transverses pour déplacer le point de focalisation (21) suivant deux directions transverses dans le plan focal intermédiaire (20), de manière à déplacer l'image du point de focalisation (61, 62) suivant deux directions transverses dans le plan focal objet (51) ou, respectivement, dans le plan focal image (52) de l'objectif de microscope (5) ; collecter un faisceau lumineux (30, 70, 72) formé par réflexion, diffusion et/ou transmission du faisceau lumineux d'excitation et recevoir le faisceau lumineux (30, 70, 72) formé par réflexion, diffusion et/ou transmission sur un système de détection spectrométrique.

## Patentansprüche

1. Mikrospektrometrievorrichtung mit Lichtstrahlabtastung mit mindestens einer Lichtquelle (1), die zum Aussenden eines Anregungslichtstrahls (10) ausgelegt ist, einem Mikroskopobjektiv (5), das auf einer optischen Hauptachse (11) der Mikrospektrometrievorrichtung angeordnet ist, wobei das Mikroskopobjektiv (5) eine gegenstandsseitige Brennebene (51) und eine bildseitige Brennebene (52) aufweist, einem System (100) zum Verlagern des Anregungslichtstrahls in zwei zur optischen Achse des Strahls transversalen räumlichen Richtungen (X, Y), wobei das Mikroskopobjektiv (5) und das Verlagerungssystem (100) dazu ausgelegt sind, den Anregungslichtstrahl (10) auf einer Probe zu verlagern, und ein optisches System (5, 15) dazu ausgelegt ist, einen durch Reflektion, Diffusion und/oder Übertragung des Anregungslichtstrahls (10) auf der Probe gebildeten Lichtstrahl (30, 70, 72) einzufangen, und einem spektrometrischen Erfassungssystem, das dazu ausgelegt ist, den durch Reflektion, Diffusion und/oder Übertragung des Anregungslichtstrahls (10) gebildeten Lichtstrahl (30, 70, 72) zu empfangen, **dadurch gekennzeichnet, daß** das System (100) zum Verlagern des Anregungslichtstrahls (10) folgendes aufweist: ein erstes optisches fokussierendes Bauteil (M1, L1), das dazu ausgelegt ist, den Anregungslichtstrahl (10) in einem Brennpunkt (21) in einer Zwischenbrennebene (20) zu empfangen und zu fokussieren, ein auf einem optischen Weg des Strahls zwischen der Zwischenbrennebene (20) und dem Mikroskopobjektiv (5) angeordnetes weiteres optisches fokussierendes Bauteil (M3, L3), wobei das weitere optische fokussierende Bauteil (M3, L3) dazu ausgelegt ist, ein Bild der Zwischenbrennebene (20) in der gegenstandsseitigen Brennebene (51) beziehungsweise in der bildseitigen Brennebene (52) des Mikroskopobjektivs (5) zu bilden, und einen einzigen auf dem optischen Weg des Anregungslichtstrahls angeordneten Abtastspiegel (M2), wobei der Abtastspiegel (M2) plan und auf einer um zwei transversale Drehachsen orientierbaren Platine montiert ist, wobei die beiden Drehachsen in der Ebene des Abtastspiegels (M2) liegen, wobei der Abtastspiegel (M2) dazu ausgelegt ist, den Brennpunkt (21) in zwei transversalen Richtungen in der Zwischenbrennebene (20) so zu verlagern, daß das Bild des Brennpunkts (61, 62) in zwei transversalen Richtungen in der gegenstandsseitigen Brennebene (51) beziehungsweise in der bildseitigen Brennebene (52) des Mikroskopobjektivs (5) verlagert wird,
**dadurch gekennzeichnet, daß** der Abtastspiegel (M2) auf dem optischen Weg des Anregungslichtstrahls zwischen dem ersten fokussierenden optischen Bauteil (M1, L1) und der Zwischenbrennebene (20) angeordnet ist.

2. Mikrospektrometrievorrichtung mit Lichtstrahlabtastung gemäß Anspruch 1, wobei das erste fokussierende optische Bauteil (M1, L1) ein torischer Spiegel ist.

3. Mikrospektrometrievorrichtung mit Lichtstrahlabtastung gemäß Anspruch 2, wobei der torische Spiegel (M1) dazu ausgelegt ist, die optischen geometrischen Abberationen in der Zwischenbrennebene (20) zu reduzieren.

4. Mikrospektrometrievorrichtung mit Lichtstrahlabtastung gemäß Anspruch 1, wobei das erste fokussierende optische Bauteil (M1, L1) mindestens eine Linse aufweist.

5. Mikrospektrometrievorrichtung mit Lichtstrahlabtastung gemäß einem der Ansprüche 1 bis 4, wobei das erste fokussierende optische Bauteil (M1, L1) auf einer Führungsschiene (31) montiert ist, die dazu ausgelegt ist, den Abstand zwischen dem ersten fokussierenden optischen Bauteil (M1, L1) und dem Mikroskopobjektiv (5) einzustellen.

6. Mikrospektrometrievorrichtung mit Lichtstrahlabtastung gemäß einem der Ansprüche 1 bis 5, wobei das weitere fokussierende optische Bauteil (M3, L3) ein sphärischer Spiegel, ein torischer Spiegel oder eine Linse ist.

7. Mikrospektrometrievorrichtung mit Lichtstrahlabtastung gemäß einem der Ansprüche 1 bis 6, wobei das weitere fokussierende optische Bauteil (M3, L3) auf einer weiteren Führungsschiene (33) montiert ist, die dazu ausgelegt ist, den Abstand zwischen dem weiteren fokussierenden optischen Bauteil (M3, L3) und dem Mikroskopobjektiv (5) einzustellen.

8. Mikrospektrometrievorrichtung mit Lichtstrahlabtastung gemäß einem der Ansprüche 1 bis 7, wobei der Abtastspiegel (M2) so angeordnet ist, daß er den Anregungslichtstrahl (10) unter einem Einfallswinkel von weniger als oder gleich 15 Grad empfängt.

9. Mikrospektrometrievorrichtung mit Lichtstrahlabtastung gemäß einem der Ansprüche 1 bis 8, die außerdem einen ersten planen Umlenkspiegel (M0) und/oder einen weiteren planen Umlenkspiegel (M4) aufweist, wobei der erste plane Umlenkspiegel (M0) strahlaufwärts vom ersten fokussierenden optischen Bauteil (M1, L1) und, oder beziehungsweise, der weitere plane Umlenkspiegel (M4) zwischen dem weiteren fokussierenden optischen Bauteil (M3, L3) und dem Mikroskopobjektiv (5) angeordnet ist.

10. Mikrospektrometrievorrichtung mit Lichtstrahlabtastung gemäß einem der Ansprüche 1 bis 9, wobei die orientierbare Platine ein Betätigungsorgan (25) mit zwei Drehachsen vom piezoelektrischen Typ oder vom Typ einer akustischen Spule aufweist.

11. Mikrospektrometrievorrichtung mit Lichtstrahlabtastung gemäß einem der Ansprüche 1 bis 10, wobei die mindestens eine Lichtquelle (1) eine oder mehrere Quellen vom Typ einer Laserquelle und/oder einer Leuchtdiode aufweist.

12. Mikrospektrometrievorrichtung mit Lichtstrahlabtastung gemäß einem der Ansprüche 1 bis 11, wobei die Mikrospektrometrievorrichtung eine konfokale Öffnung (43) aufweist, die strahlaufwärts vom ersten fokussierenden optischen Bauteil (M1, L1) angeordnet ist, wobei der Anregungslichtstrahl (10), der auf das erste fokussierende optische Bauteil (M1, L1) fällt, gebündelt wird.

13. Mikrospektrometrievorrichtung mit Lichtstrahlabtastung gemäß einem der Ansprüche 1 bis 12, wobei das spektrometrische Erfassungssystem ein Raman-Spektrometer, ein kohärentes Anti-Stokes-Raman-Spektrometer, ein Fluoreszenzspektrometer, ein Photolumineszenzspektrometer, ein Kathodolumineszenzspektrometer, eine hyperspektrale Kamera, ein Spektralfilter oder ein abstimmbares Bandpaßfilter ist.

14. Mikrospektrometrievorrichtung mit Lichtstrahlabtastung gemäß einem der Ansprüche 1 bis 13, wobei das Mikroskopobjektiv ein Objektiv mit totaler innerer Reflektion ist und wobei das weitere fokussierende optische Bauteil (M3, L3) dazu ausgelegt ist, ein Bild der Zwischenbrennebene (20) in der gegenstandsseitigen Brennebene des Objektivs mit totaler innerer Reflektion zu bilden, so daß der gebündelte Anregungslichtstrahl winkelmäßig in die bildseitige Brennebene (52) verlagert wird und ein Lichtstrahl mit totaler innerer Reflektion auf der Probe eingefangen wird.

15. Verfahren zur Mikrospektrometrie mit Lichtstrahlabtastung mit den folgenden Schritten: Aussenden eines Anregungslichtstrahls (10) mittels einer Lichtquelle; Richten des Anregungslichtstrahls auf ein erstes fokussierendes Bauteil (M1, L1) und dann Reflektion des Anregungslichtstrahls auf einem einzigen ebenen Abtastspiegel (M2), um den Anregungslichtstrahl (10) nach der Reflektion des Anregungslichtstrahls auf dem Abtastspiegel (M2) in einem Brennpunkt (21) in der Zwischenbrennebene (20) zu fokussieren, Richten des Anregungslichtstrahls auf ein weiteres fokussierendes optisches Bauteil (M3, L3) und dann auf ein Mikroskopobjektiv (5), um ein Bild der Zwischenbrennebene (20) in der gegenstandsseitigen Brennebene (51) beziehungsweise in der bildseitigen Brennebene (52) des Mikroskopobjektivs (5) zu bilden, und Neigen des Abtastspiegels (M2) um zwei transversale Drehachsen, um den Brennpunkt (21) in zwei transversalen Richtungen in der Zwischenbrennebene (20) zu verlagern, so daß das Bild des Brennpunkts (61, 62) in zwei transversalen Richtungen in der gegenstandsseitigen Brennebene (51) beziehungsweise in der bildseitigen Brennebene (52) des Mikroskopobjektivs (5) verlagert wird; Einfangen eines durch Reflektion, Diffusion und/oder Transmission des Anregungslichtstrahls gebildeten Lichtstrahls (30, 70, 72) und Empfangen des durch Reflektion, Diffusion und/oder Transmission gebildeten Lichtstrahls (30, 70, 72) auf einem spektrometrischen Erfassungssystem.

## Claims

1. A light-beam scanning micro-spectrometry device comprising at least one light source (1) adapted to emit an excitation light beam (10), a microscope objective (5) arranged along a main optical axis (11) of the micro-spectrometry device, the microscope objective (5) having an object focal plane (51) and an image focal plane (52), a system (100) for moving the excitation light beam along two spatial directions (X, Y) transverse to the optical axis of the beam, the microscope objective (5) and the movement system (100) being adapted to move the excitation light beam (10) on a sample and an optical system (5, 15) adapted to collect a light beam (30, 70, 72) formed by reflection, scattering and/or transmission of the excitation light beam (10) on the sample, and a spectrometric detection system adapted to receive the light beam (30, 70, 72) formed by reflection, scattering and/or transmission, **characterized in that** the excitation light beam movement system (10) comprises: a first focusing optical component (M1, L1) adapted to receive and focus the excitation light beam (10) to a focusing point (21) in an intermediate focal plane (20), another focusing optical component (M3, L3) arranged on an optical path of the beam between the intermediate focal plane (20) and the microscope objective (5), the other focusing optical component (M3, L3) being adapted to form an image of the intermediate focal plane (20) in the object focal plane (51) or, respectively, in the image focal plane (52) of the microscope objective (5), and a single scanning mirror (M2) arranged on the optical path of the excitation light beam, the scanning mirror (M2) being planar and mounted on a stage rotatable about two transverse axes of rotation, the two axes of rotation being in the plane of the scanning mirror (M2), the scanning mirror (M2) being adapted to move the focusing point (21) along two transverse directions in the intermediate focal plane (20) in such a way as to move the image of the focusing point (61, 62) along two transverse directions in the object focal plane (51) or, respectively, in the image focal plane (52) of the microscope objective (5), **characterized in that** the scanning mirror (M2) is arranged on the optical path of the excitation light beam between the first focusing optical component (M1, L1) and the intermediate focal plane (20).

2. The light-beam scanning micro-spectrometry device according to claim 1, wherein the first focusing optical component (M1, L1) is a toric mirror.

3. The light-beam scanning micro-spectrometry device according to claim 2, wherein the toric mirror (M1) is adapted to reduce reduce geometrical optical aberrations in the intermediate focal plane (20).

4. The light-beam scanning micro-spectrometry device according to claim 1, wherein the first focusing optical component (M1, L1) includes at least one lens.

5. The light-beam scanning micro-spectrometry device according to any one of claims 1 to 4, wherein the first focusing optical component (M1, L1) is mounted on a guiding rail (31) adapted to adjust the distance between the first focusing optical component (M1, L1) and the microscope objective (5).

6. The light-beam scanning micro-spectrometry device according to any one of claims 1 to 5, wherein the other focusing optical component (M3, L3) is a spherical mirror, a toric mirror or a lens.

7. The light-beam scanning micro-spectrometry device according to any one of claims 1 to 6, wherein the other focusing optical component (M3, L3) is mounted on a another guiding rail (33) adapted to adjust the distance between the other focusing optical component (M3, L3) and the microscope objective (5).

8. The light-beam scanning micro-spectrometry device according to any one of claims 1 to 7, wherein the scanning mirror (M2) is arranged in such a way as to receive the excitation light beam (10) under an angle of incidence lower than or equal to 15 degrees.

9. The light-beam scanning micro-spectrometry device according to any one of claims 1 to 8, further including a first planar deflecting mirror (M0) and/or another planar deflecting mirror (M4), the first planar deflecting mirror (M0) being arranged upstream from the first focusing optical component (M1, L1) and/or, respectively, the other planar deflecting mirror (M4) being arranged between the other focusing optical component (M3, L3) and the microscope objective (5).

10. The light-beam scanning micro-spectrometry device according to any one of claims 1 to 9, wherein the rotatable stage includes a two-axis-of-rotation actuator (25) of the piezoelectric or voice coil type.

11. The light-beam scanning micro-spectrometry device according to any one of claims 1 to 10, wherein said at least one light source (1) comprises one or several sources of the laser source and/or light-emitting diode type.

12. The light-beam scanning micro-spectrometry device according to any one of claims 1 to 11, wherein the micro-spectrometry device includes a confocal aperture (43) arranged upstream of the first focusing optical component (M1, L1), the excitation light beam (10) incident on the first focusing optical component (M1, L1) being collimated.

13. The light-beam scanning micro-spectrometry device according to any one of claims 1 to 12, wherein the spectrometric detection system includes a Raman spectrometer, a coherent anti-Stokes Raman spectrometer, a fluorescence spectrometer, a photoluminescence spectrometer, a cathodoluminescence spectrometer, a hyperspectral camera, a spectral filter or a tunable bandpass filter.

14. The light-beam scanning micro-spectrometry device according to any one of claims 1 to 13, wherein the microscope objective is a total internal reflection objective and wherein the other focusing optical component (M3, L3) is adapted to form an image of the intermediate focal plane (20) in the object focal plane of the total internal reflection objective, in such a way as to angularly move the collimated excitation light beam in the image focal plane (52) and to collect a total internal reflection light beam on the sample.

15. A method of light-beam scanning micro-spectrometry comprising the following steps: emitting an excitation light beam (10) by means of a light source; directing the excitation light beam towards a first focusing optical component (M1, L1) then reflecting the excitation light beam on a single planar scanning mirror (M2), in such a way as to focus the excitation light beam (10) to a focusing point (21) in an intermediate focal plane (20) after reflection of the excitation light beam on the scanning mirror (M2), directing the excitation light beam towards another focusing optical component (M3, L3) then a microscope objective (5), in such a way as to form an image of the intermediate focal plane (20) in the object focal plane (51) or, respectively, in the image focal plane (52) of the microscope objective (5), and tilting the scanning mirror (M2) about two transverse axes of rotation to move the focusing point (21) along two transverse directions in the intermediate focal plane (20), in such a way as to move the image of the focusing point (61, 62) along two transverse directions in the object focal plane (51) or, respectively, in the image focal plane (52) of the microscope objective (5); collecting a light beam (30, 70, 72) formed by reflection, scattering and/or transmission of the excitation light beam, and receiving the light beam (30, 70, 72) formed by reflection, scattering and/or transmission on a spectrometric detection system.
